# EUROPEAN PATENT SPECIFICATION

(11) **EP 2 537 446 B1**
(45) Date of publication and mention of the grant of the patent: **29.11.2017**
(21) Application number: 11425164.8
(22) Date of filing: 23.06.2011
(51) Int. Cl.: A47J 36/02, B65D 1/34, B65D 81/34, B64D 43/02, A47G 19/02, B65D 43/02

(54) **Plate and food container**
Teller und Lebensmittelbehälter
Assiette et récipient pour aliments

(43) Date of publication of application: 26.12.2012
(73) Proprietor: Paoli, Giancarlo, 67100 L'Aquila (AQ) (IT); Concordia, Roberta, 67100 L'Aquila (AQ) (IT)
(72) Inventor: Paoli, Giancarlo, 67100 L'Aquila (AQ) (IT); Concordia, Roberta, 67100 L'Aquila (AQ) (IT)
(74) Representative: Romano, Giuseppe

(56) References cited:
- WO-A1-2009/057180
- US-A1- 2003 155 353
- US-A1- 2003 197 021
- US-A1- 2005 269 319
- US-A1- 2007 114 231

## Description

The present invention relates to a plate, made in a manner such as to be reversibly connected to a second plate complementary thereto so as to form a food container, particularly suitable for microwave use.

### History of the technology

The state of the art is aware of plates for containing inside them, when closed topwise by a second plate, foods for transport, or for heating them before consumption, e.g. in a microwave oven, as described for example in US 2007/0114231.

### Drawbacks of the prior art

This typology of plates is commonly employed in a vast number of applications; nevertheless, it suffers from significant and evident drawbacks.

In fact, food when heated generates vapour that unavoidably increases pressure into the container formed by plates connected to each other.

Said vapour, by remaining confined into the container, is such as to worsen the quality of the foods, which tend to become soft. The pressure gradient between inside and outside also tends to affect the seal of the container, which therefore risks opening up. This entails an evident drawback since, as is known, such containers are employed especially for transporting foods, and an accidental opening of the container could expose the latter to the risk of external contamination.

In addition, when the container is being opened, the pressure gradient established between the inside and the outside is such as to forcedly let out the vapour, which thereby impinges on the consumer when he/she opens the container to consume the food.

Moreover, consider that containers in use to date have a non-optimal system of engagement to each other, since in order to ensure connection it is necessary to exert pressure with the fingers along all of the circumferential development of the plate, something which entails useless waste of time and is surely uncomfortable.

### Objects of the Invention

Object of the present invention is to solve the drawbacks mentioned above by providing a plate as substantially defined in claim 1.

A further object of the present invention is to provide a food container as substantially defined in claim 9.

Additional features of the invention are defined in the corresponding dependent claims thereof.

### Advantages of the Invention

The present invention, by overcoming the mentioned problems of the known art, entails several evident advantages.

The container subject-matter of the present invention, formed by a pair of plates connected therebetween so as to define an internal volume, allows to manage vapours generated therein during heating (e.g. in a microwave oven) so that those affect neither the end quality of the foods contained therein before consumption nor the seal of the container itself, furthermore preventing impingement on the consumer when the container is being opened.

According to a further aspect of the invention, the container allows for its being closed with no need to exert pressure along its entire rim.

Advantageously, it is closable by a snap-type engagement, as will be described in detail hereinafter.

### Brief description of the drawings

Still further advantages, as well as the features and the modes of employ of the present invention will be made evident in the following detailed description of two preferred embodiments thereof, given by way of example and not for limitative purposes. Reference will be made to the figures of the annexed drawings, wherein:
Figure 1 shows in a perspective view a plate according to the present invention;
Figure 2 shows in a perspective view a detail of Figure 1;
Figures 3 and 4 show in a side view the engagement between two plates to form the container, it also subject-matter of the present invention;
Figure 5 shows a detail of the preceding Figures 3-4;
Figure 6 shows the plate subject-matter of the present invention in a plan view;
Figure 7 shows, in a plan view and in a side view, a plate according to a variant embodiment.

Hereinafter, the invention will be described with reference to the above-indicated figures.

### Detailed description of the drawings

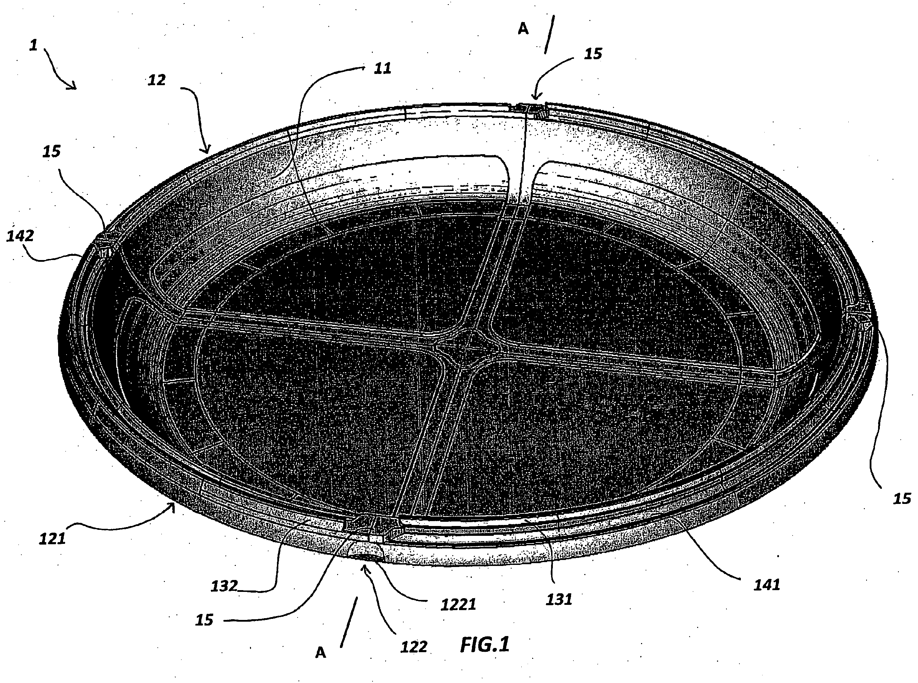

Referring to Figure 1, a plate generally denoted by number reference 1 is shown.

The plate 1 according to the invention comprises the side wall 11 and a peripheral rim 12.

On the peripheral rim 12 a coupling means is obtained, configured to connect the latter to a second peripheral rim of a second plate (not shown) so as to form a closed container defining therein a volume useful precisely to receive foods.

The peripheral rim 12 comprises, at a free edge thereof, a stiffening peripheral volute 121 having along its peripheral development recesses 122, preferably having a substantially U-like shape.

Such recesses 122, being obtained on the stiffening volute, act as weakness points thereof; therefore, when the container is closed, preferably so that the recesses lie in positions corresponding to each other, they are such as to allow venting of inside vapour under pressure. Thanks to them, the volute is capable of flexing locally so as to allow vapour outletting, concomitantly ensuring container stiffness.

Moreover, in order to further improve such effect, the free edge of the peripheral rim 12 has, at each recess 122, a base tab 1221 arranged along the stiffening volute 121.

In fact, such tab has the task of cooperating with vapour being outlet from the container in order to contribute to local deformation of the stiffening volute, and of making its outletting more efficient.

Moreover, the tab contributes to improve the opening of the container, as it acts as a grip means thereof to separate the two soup plates connected to each other.

The coupling means, obtained on the peripheral rim 12, comprises a plurality of protrusions (of which consecutive protrusions 131 and 132 are denoted by way of example in the figure) and a plurality of hollows (of which hollows 141 and 142 are denoted by way of example in the figure).

Protrusions 131, 132 and hollows 141, 142 are configured so as to operate a pressure engagement with respective hollows and protrusions prearranged on the second plate (not shown).

In the preferred embodiment described herein by way of example and not for limitative purposes, protrusions and hollows obtained on the peripheral rim are in equal number, so that, advantageously, the second plate to be connected in order to prearrange the container is identical to the plate 1 shown. According to the invention protrusions and hollows are alternately obtained along two concentric portions (an inner and an outer one) of the peripheral rim 12. Each protrusion, e.g. obtained on the internal portion, is side-by-side to a respective hollow along the external portion. Referring to the example in the figure, the protrusion 131 is side-by-side to the hollow 141, and likewise the hollow 142 is side-by-side to the protrusion 132. Each pair of protrusion-hollow side-by-side to each other makes up an engagement sector.

The angular aperture of each engagement sector depends on the number of sectors prearranged along the circumferential development of the plate rim.

By prearranging at least two sectors, each one having an angular aperture of 180°, an advantageous balancing effect is obtained on pressures developing on the contacting protrusions of the due soup plates, as each plate will have a protrusion subjected to a thrust toward the container inside and a protrusion subjected to a thrust toward the container outside, so as to have such stresses cancel each other out; so, pressures involved in closing the container are well-balanced to each other. Always referring to Figure 1, the peripheral rim 12 has plane portions 15, each interposed between two consecutive engagement sectors.

The plane portions 15, when the plate 1 is connected to the second plate (not shown) to make up the closed container, come to lie in a corresponding position with plane portions belonging to the second plate.

In such positions, vapour under pressure finds a preferential way out to leave the inside of the container.

Advantageously, the recesses 122 are positioned at such plane portions 15, to further improve the vapour venting process.

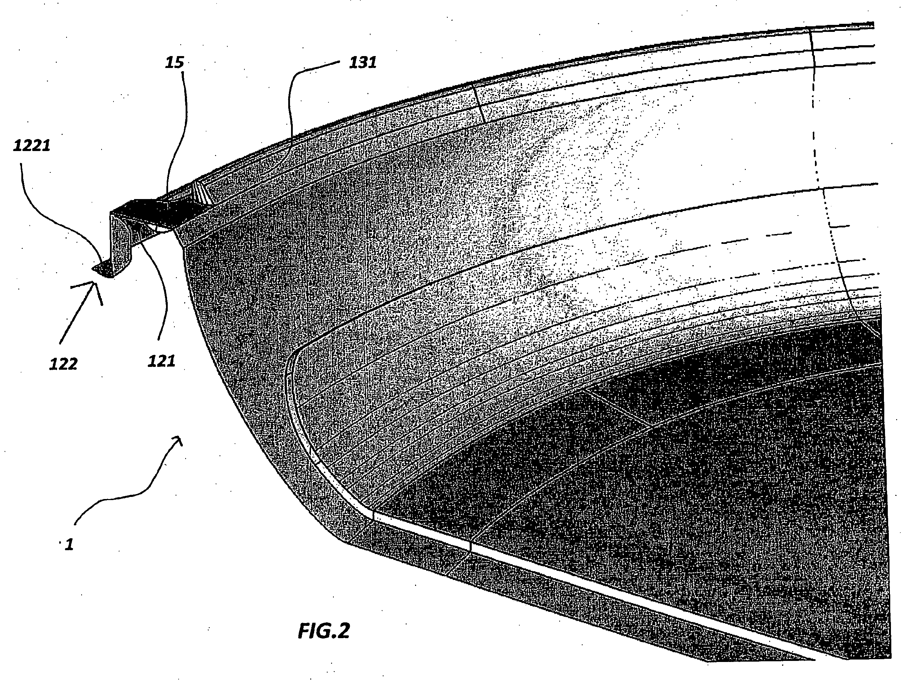

Referring now to next Figure 2, the plate 1 is shown along section line A-A of Figure 1.

In particular, the plane portion 15 can be seen, at which the recess 122 is obtained along the stiffening volute 121.

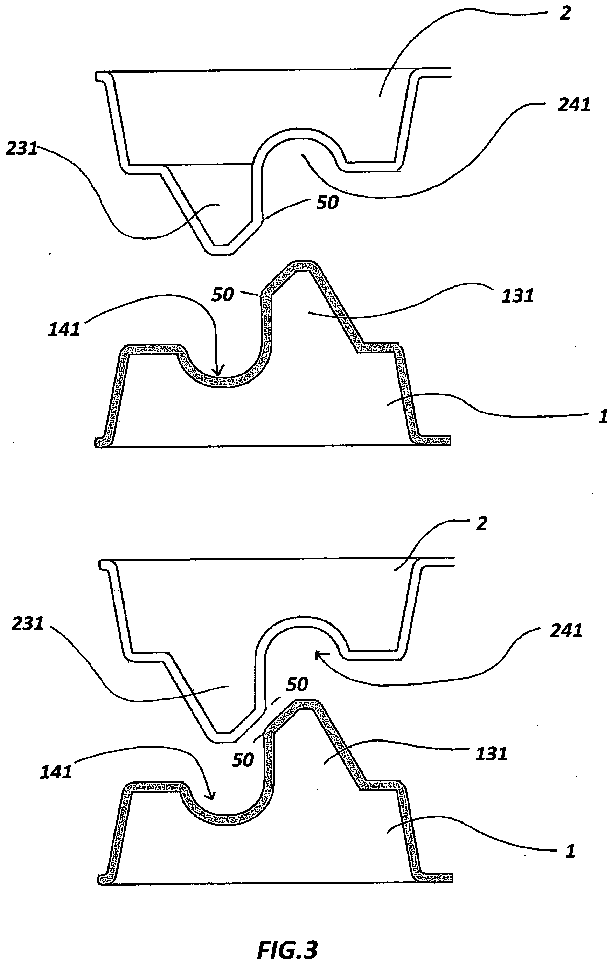

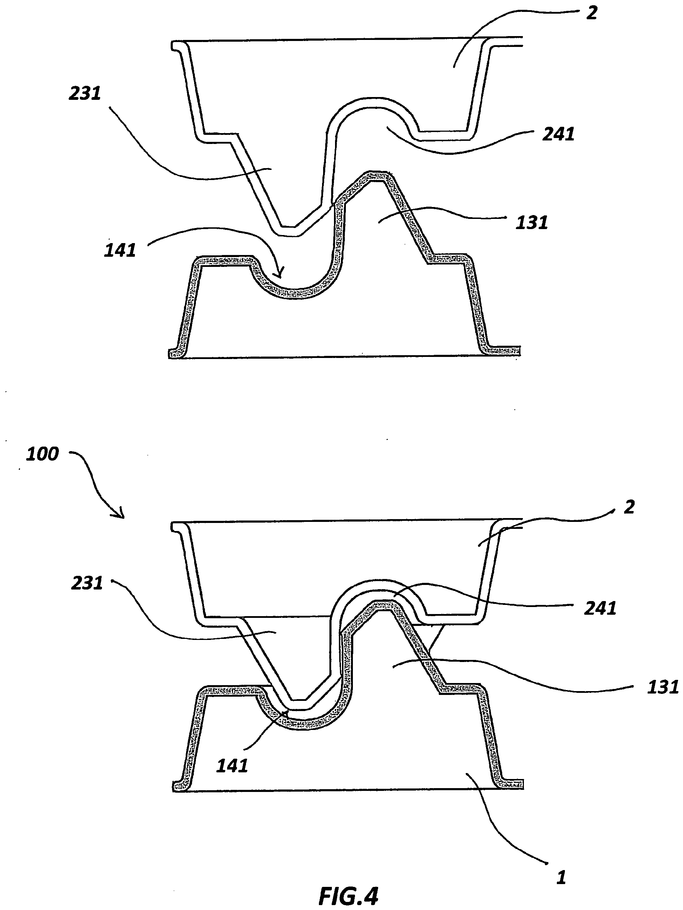

Referring to Figures 3 and 4, the pair protrusion - hollow 131, 141 of the plate 1 and a pair protrusion - hollow 231, 241 of the second plate, denoted in figure by reference number 2, are sectionally shown by way of example.

In particular, the sequence shows the connection between the two engagement sectors, and specifically the fitting of the protrusion 131 of plate 1 into the hollow 241 of second plate 2, and of the protrusion 231 of second plate 2 into the hollow 141 of plate 1.

Plates 1 and 2, when fitted the one into the other as described above, make up the food container, preferably made of polypropylene and generally denoted in Figure 4 by reference number 100.

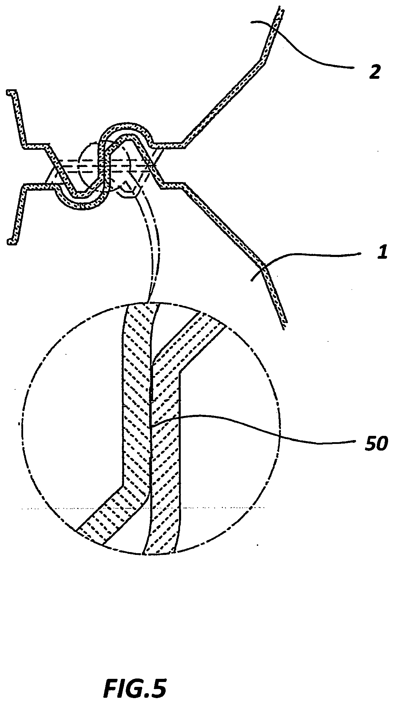

Referring to next Figure 5, a detail of the engagement system between two corresponding protrusions of the two plates 1 and 2 is shown.

In particular, as shown in the enlargement of the figure, each protrusion comprises a corner 50 arranged along a longitudinal development thereof, placed on a wall thereof facing the hollow of the respective engagement sector. Such a corner is also indicated in the preceding Figure 3.

Therefore, during the engagement between the two protrusions of the plates 1 and 2, the corners cooperate with each other so as to make a snap-type engagement. Thus, it is not necessary anymore to ensure the fitting of the protrusions of the plate 1 into the hollows of the plate 2 (and vice versa) by a pressure distributed along all of the circumferential development of the plate. Opening/closing of the container is thereby ensured by the snap caused by cooperation of the two corners.

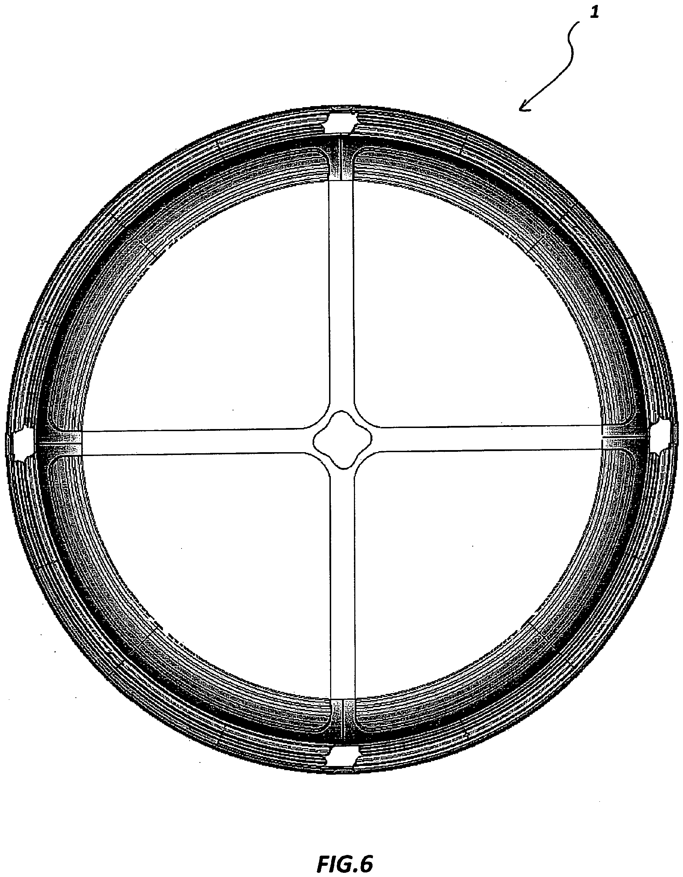

Figure 6 shows the plate 1 in a plan view. In said preferred embodiment the plate is equipped with four engagement sectors, each sector therefore having an angular development of 45°.

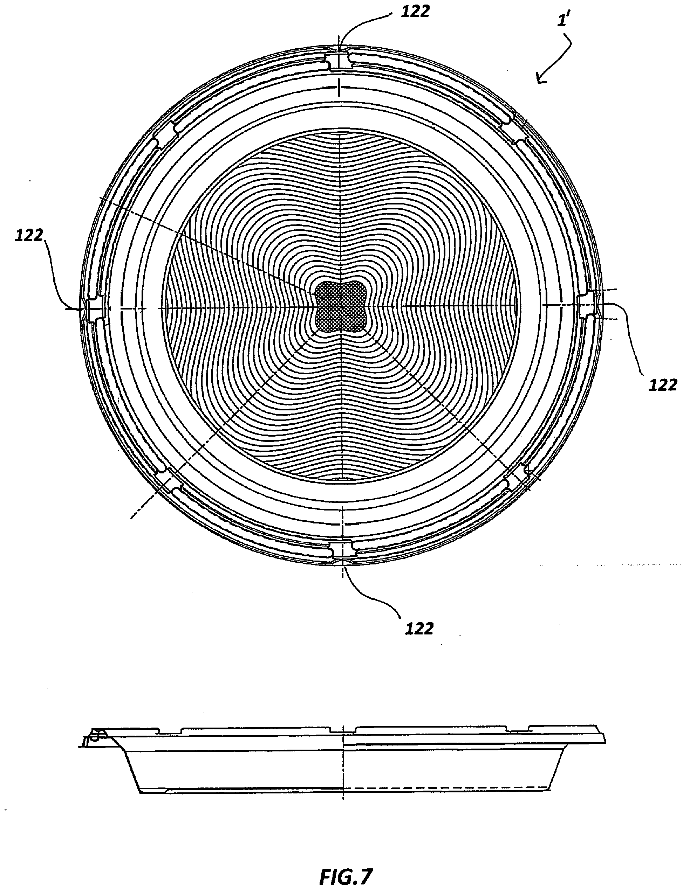

Figure 7 shows instead a plate 1' according to a variant embodiment. The plate 1' is wholly analogous to the above-described plate 1, with the difference that in this case the engagement sectors are eight in number. It follows that each sector has an angular width equal to one-half of 45°.

Preferably, above all with the increase of the number of sectors prearranged, the recesses 122 obtained on the stiffening volute are alternately arranged at the plane portions.

Thus, such recesses also serve as reference marks for connecting the two plates. In fact, by prearranging the recesses at the plane portions having, e.g., along the inner concentric portion and with respect to the centre a protrusion at the left and a hollow at the right (situation in figure), the container can be assembled by ensuring that the recesses obtained on the two plates lie in a corresponding position.

The present invention has been hereto described with reference to two preferred embodiments thereof. It is understood that other embodiments might exist, all falling within the concept of the same invention, and all comprised within the protective scope of the claims hereinafter.

## Claims

1. A plate (1, 1') apt to be connected with a second identical plate, having a side wall (11), a peripheral rim (12) and coupling means (131, 141) obtained on said peripheral rim (12), apt to connect the latter to a peripheral rim of the second identical plate (2), said peripheral rim (12) comprising, at a free edge thereof, a stiffening peripheral volute (121) having along a development thereof one or more recesses (122) apt to allow vapour outletting, wherein said coupling means (131, 141) comprises at least two protrusions (131, 132) and at least two hollows (141, 142), each protrusion (131, 132) being configured so as to respectively fit into a complementary hollow (241, 242) obtained on the second identical plate (2), and each hollow (141, 142) being configured to receive a complementary protrusion (231, 232) obtained on the second identical plate (2), wherein said protrusions (131, 132) and hollows (141, 142) are alternately obtained along an inner concentric portion and an outer concentric portion of said peripheral rim (12), each protrusion (131) and each hollow (142) of said inner portion being side-by-side respectively to a hollow (141) and a protrusion (132) of said outer portion, each protrusion-hollow pair (131, 141; 132, 142) side-by-side to each other, making up an engagement sector.

2. The plate (1, 1') according to the preceding claim, wherein said free edge has, at each recess (122), a base tab (1221) lying along said stiffening volute (121).

3. The plate (1) according to claims 1 or 2, wherein each recess (122) has a substantially U-like shape.

4. The plate (1, 1') according to any one of the preceding claims, wherein each protrusion comprises a corner (50) arranged along the longitudinal development of a wall thereof facing the hollow of the respective engagement sector, said corner (50) being configured so as to make a snap-type engagement with a complementary protrusion of the second plate when fit into said hollow.

5. The plate (1, 1') according to any one of the preceding claims, wherein said peripheral rim (12) has a plane portion (15) interposed between two engagement sectors consecutive to each other.

6. The plate (1, 1') according to the preceding claim, each recess (122) of said one or more recesses (122) being positioned along said stiffening volute (121) at said plane portions (15).

7. The plate (1, 1') according to the preceding claim, wherein said recesses (122) are alternately positioned at said plane portions (15).

8. The plate (1, 1') according to any one of the preceding claims, wherein said protrusions (131, 132) and hollows (141, 142) are in equal number therebetween.

9. A reclosable food container (100), **characterized in that** it comprises a pair of soup plates (1,2) according to one of the claim 1 to 8.

10. A reclosable food container (100) according to the preceding claim, made of polypropylene.

## Patentansprüche

1. Teller (1, 1'), der geeignet ist, mit einem zweiten identischen Teller verbunden zu werden, mit einer Seitenwand (11), einem peripheren Rand (12) und Kopplungsmitteln (131, 141), die an dem peripheren Rand (12) vorgesehen sind, geeignet, um letzteren mit einem peripheren Rand des zweiten identischen Tellers (2) zu verbinden, wobei der periphere Rand (12) an einer freien Kante davon einen versteifenden peripheren Auslass (121) umfasst, der entlang einer Entwicklung desselben ein oder mehrere Ausnehmungen (122) aufweist, die geeignet sind, Dampf auszulassen, wobei die Kopplungsmittel (131, 141) wenigstens zwei Vorsprünge (131, 132) und wenigstens zwei Aushöhlungen (141, 142) umfassen, wobei jeder Vorsprung (131, 132) konfiguriert ist, so dass er jeweils in eine komplementäre Aushöhlung (241, 242) passt, die an dem zweiten identischen Teller (2) vorgesehen ist, und wobei jede Aushöhlung (141, 142) konfiguriert ist, um einen komplementären Vorsprung (131, 132) aufzunehmen, der in dem zweiten identischen Teller (2) vorgesehen ist, wobei die Vorsprünge (131, 132) und die Aushöhlungen (141, 142) wechselweise entlang einem inneren konzentrischen Teil und einem äußeren konzentrischen Teil des peripheren Randes (12) vorgesehen sind, wobei jeder Vorsprung (131) und jede Aushöhlung (142) des inneren Teils Seite an Seite bezüglich einer Aushöhlung (141) und eines Vorsprungs (132) des äußeren Teils sind, wobei jedes Vorsprung-Aushöhlungspaar (131, 141; 132, 142) Seite an Seite zueinander ist, wodurch ein Verbindungsabschnitt gebildet wird.

2. Teller (1, 1') nach dem vorhergehenden Anspruch, wobei die freie Kante an jeder Ausnehmung (122) einen Basisabschnitt (1221) aufweist, der entlang dem versteifenden Auslass (121) liegt.

3. Teller (1) nach den Ansprüchen 1 oder 2, wobei jede Ausnehmung (122) eine im Wesentlichen U-ähnliche Form aufweist.

4. Teller (1, 1') nach einem der vorhergehenden Ansprüche, wobei jeder Vorsprung eine Ecke (50) umfasst, die entlang der länglichen Entwicklung der Wand derselben angeordnet ist, welche der Aushöhlung des jeweiligen Verbindungssektors zugewandt ist, wobei die Ecke (50) konfiguriert ist, um eine Verbindung vom Einschnapptyp mit einem komplementären Vorsprung des zweiten Tellers auszubilden, wenn sie in die Aushöhlung eingepasst wird.

5. Teller (1, 1') nach einem der vorhergehenden Ansprüche, wobei der periphere Rand (12) einen ebenen Teil (15) aufweist, der zwischen zwei Verbindungssektoren angeordnet ist, die aufeinander folgen.

6. Teller (1, 1') nach einem der vorhergehenden Ansprüche, wobei jede Ausnehmung (122) von der einen oder den mehreren Ausnehmungen (122) entlang dem versteifenden Auslass (121) an den ebenen Teilen (15) angeordnet ist.

7. Teller (1, 1') nach dem vorhergehenden Anspruch, wobei die Ausnehmungen wechselweise an den ebenen Teilen (15) angeordnet sind.

8. Teller (1, 1') nach einem der vorhergehenden Ansprüche, wobei die Vorsprünge (131, 132) und die Aushöhlungen (141, 142) in ihrer Anzahl gleich sind.

9. Wiederverschließbarer Lebensmittelbehälter (100), **dadurch gekennzeichnet, dass** er ein Paar von Suppentellern (1, 2) nach einem der Ansprüche 1 bis 8 aufweist.

10. Wiederverschließbarer Lebensmittelbehälter (100) nach dem vorhergehenden Anspruch, hergestellt aus Polypropylen.

## Revendications

1. Assiette (1, 1') apte à être raccordée à une seconde assiette identique, ayant une paroi latérale (11), un rebord périphérique (12) et des moyens de couplage (131, 141) obtenus sur ledit rebord périphérique (12), aptes à raccorder ce dernier à un rebord périphérique de la seconde assiette identique (2), ledit rebord périphérique (12) comprenant, au niveau de son bord libre, une volute périphérique de raidissement (121) ayant, le long de son développement, un ou plusieurs évidements (122) aptes à laisser sortir la vapeur, dans lequel lesdits moyens de couplage (131, 141) comprennent au moins deux saillies (131, 132) et au moins deux creux (141, 142), chaque saillie (131, 132) étant configurée afin de s'adapter respectivement dans un creux complémentaire (241, 242) obtenu sur la seconde assiette identique (2), et chaque creux (141, 142) étant configuré pour recevoir une saillie complémentaire (231, 232) obtenue sur la seconde assiette identique (2), dans laquelle lesdites saillies (131, 132) et les creux (141, 142) sont obtenus de manière alternée le long d'une partie concentrique interne et d'une partie concentrique externe dudit rebord périphérique (12), chaque saillie (131) et chaque creux (142) de ladite partie interne étant respectivement côte à côte par rapport à un creux (141) et à une saillie (132) de ladite partie externe, chaque paire de saillie - creux (131, 141 ; 132, 142) côte à côte, composant un secteur de mise en prise.

2. Assiette (1, 1') selon la revendication précédente, dans laquelle ledit bord libre a, au niveau de chaque évidement (122), une languette de base (1221) se trouvant le long de ladite volute de raidissement (121).

3. Assiette (1, 1') selon les revendications 1 ou 2, dans laquelle chaque évidement (122) a sensiblement une forme de U.

4. Assiette (1, 1') selon l'une quelconque des revendications précédentes, dans laquelle chaque saillie comprend un coin (50) agencé le long du développement longitudinal de sa paroi faisant face au creux du secteur de mise en prise respectif, ledit coin (50) étant configuré pour réaliser une mise en prise de type à encliquetage avec une saillie complémentaire de la seconde assiette, lorsqu'elle s'adapte dans ledit creux.

5. Assiette (1, 1') selon l'une quelconque des revendications précédentes, dans laquelle ledit rebord périphérique (12) a une partie plane (15) intercalée entre deux secteurs de mise en prise consécutifs.

6. Assiette (1, 1') selon la revendication précédente, chaque évidement (122) desdits un ou plusieurs évidements (122) étant positionné le long de ladite volute de raidissement (121) au niveau desdites parties planes (15).

7. Assiette (1, 1') selon la revendication précédente, dans laquelle lesdits évidements (122) sont positionnés de manière alternée au niveau desdites parties planes (15).

8. Assiette (1, 1') selon l'une quelconque des revendications précédentes, dans laquelle lesdites saillies (131, 132) et les creux (141, 142) sont en nombres égaux.

9. Récipient alimentaire refermable (100), **caractérisé en ce qu'**il comprend une paire d'assiettes à soupe (1, 2) selon l'une des revendications 1 à8.

10. Récipient alimentaire refermable (100) selon la revendication précédente, réalisé à partir de polypropylène.
